# EUROPEAN PATENT APPLICATION

(11) **EP 4 738 115 A1**
(43) Date of publication of application: **06.05.2026**
(21) Application number: 25208894.3
(22) Date of filing: 15.10.2025
(51) Int. Cl.: G06F 9/48

(54) **SCHEDULING OF TASKS FOR ACCELERATORS**

(30) Priority: 31.10.2024 US 202418933310
(71) Applicant: VMware LLC, Palo Alto, CA 94304 (US)
(72) Inventor: Chen, Xiaoqi, Sunnyvale, CA 94086 (US); Wei, Michael, Irvine, CA 92618 (US)
(74) Representative: Grünecker Patent- und Rechtsanwälte PartG mbB

(57) **Abstract**

A computer system is configured to schedule tasks to be performed by a plurality of accelerators including a first accelerator and a second accelerator, by performing the steps of: receiving a plurality of tasks; determining, for each of the tasks, a time period during which the first accelerator would be expected to consume maximum power while performing the task; determining, for each of the tasks, a time period during which the second accelerator would be expected to consume maximum power while performing the task; scheduling the tasks across the first and second accelerators according to the determined time periods of maximum power consumption, wherein based on the scheduling, there is no overlap between time periods for maximum power consumption in the first accelerator and time periods for maximum power consumption in the second accelerator; and instructing the first and second accelerators to perform the tasks according to the scheduling.

## Description

### Background

Data centers are facilities that house large numbers of computers and networking equipment for storing, managing, and distributing data. Data centers execute software on hardware platforms of the computers to provide cloud computing services remotely from users. A growing number of such services are increasingly heavyweight, including those that perform deep learning for artificial intelligence (AI) applications. Computers typically use accelerators for performing computationally intensive tasks for these applications.

As used herein, accelerators are specialized hardware designed for performing tasks such as executing artificial neural networks (ANNs) and rending images and video more efficiently than general-purpose central processing units (CPUs). Examples of accelerators include graphics processing units (GPUs), tensor processing units (TPUs), neural processing units (NPUs), and field-programmable gate arrays (FPGAs). The proliferation of computationally intensive applications has increased the demand for accelerators in data centers. Accelerators consume a significant amount of electricity, especially high-performance models thereof. However, while performing tasks, the accelerators typically do not consume power at a constant level.

As a rough example, a particular task that a particular GPU takes 10 milliseconds to execute, may cause that GPU to consume 600 watts for 4 milliseconds, and then cause the GPU to consume 300 watts for the remaining 6 milliseconds. In other words, such task may only cause the GPU to execute at a maximum power for said task for the first 4 milliseconds of the task's execution. As used herein, the "maximum power" for a particular task executing on a particular accelerator is the most power (most energy in a given time period) that task causes the accelerator to consume, e.g., 600 watts in the above example. Such maximum power may be as great as the thermal design power (TDP) of an accelerator, which is the maximum heat that accelerator generates, or such maximum power may be less than the TDP.

At varying granularities, data centers have power constraints that limit the execution of accelerators. For example, the computers may be organized into racks, and the wires in such racks have finite power capacities, e.g., 6 kilowatts per rack. Accordingly, the racks can only execute limited numbers of accelerators at any given time without exceeding such capacities and damaging equipment. Such number of accelerators is especially low during times when many accelerators are simultaneously consuming maximum power. Accordingly, during such times, the racks are inefficiently using their maximum power capacities, leading to latencies in executing tasks. Computer systems are desired that reduce such latencies when executing tasks on accelerators.

### Summary

One or more embodiments provide a computer system including a processor and memory, wherein the processor executes instructions stored in the memory to schedule tasks to be performed by a plurality of accelerators including a first accelerator and a second accelerator, based on information about power consumption. By executing such instructions, the computer system performs the steps of: receiving a plurality of tasks to be performed on the plurality of accelerators; determining, for each of the tasks, a time period during which the first accelerator would be expected to consume maximum power for the task while performing the task; determining, for each of the tasks, a time period during which the second accelerator would be expected to consume maximum power for the task while performing the task; scheduling the tasks across the first and second accelerators according to the determined time periods of maximum power consumption for the first and second accelerators, wherein based on the scheduling, there is no overlap between time periods for maximum power consumption in the first accelerator and time periods for maximum power consumption in the second accelerator; and instructing the first and second accelerators to perform the tasks according to the scheduling.

Further embodiments include a method comprising the above steps and a non-transitory computer-readable storage medium comprising instructions that cause a computer system to carry out the above steps.

### Brief Description of the Drawings

Figure 1 is a block diagram of a computer system in which a first embodiment may be implemented.
Figure 2 is a flow diagram of a method that may be performed by computers of the computer system to execute tasks using GPUs, according to the first embodiment.
Figure 3 is a block diagram of a computer system in which a second embodiment may be implemented.
Figure 4 is a flow diagram of a method that may be performed by computers of the computer system to execute a task using a GPU, according to the second embodiment.
Figure 5 is a block diagram of a computer system in which a third embodiment may be implemented.
Figure 6 is a flow diagram of a method that may be performed by a computer of the computer system to execute a task using a GPU, according to the third embodiment.

### Detailed Description

Techniques are described for executing tasks using accelerators. The techniques will be discussed primarily with respect to GPUs but it should be understood that such techniques also apply to other accelerators such as TPUs, NPUs, and FPGAs. In the case of GPUs, such techniques synchronize the execution of the GPUs based on "power consumption information" about the models of the GPUs and about the types of tasks being executed thereon. Examples of different GPU models include, e.g., the Nvidia Tesla^{®} V100 and the AMD Instinct^{™} MI100. Examples of different types of tasks include generating "inferences" using different ANNs. ANNs are machine-learning models consisting of interconnected layers of nodes, referred to as "neurons." An "inference" is an output generated by an ANN after the ANN has been trained. The power consumption information identifies the power consumption of various models of GPUs while performing particular tasks, including when those GPUs are consuming maximum power for those tasks.

For example, while performing a particular type of task, a first GPU model may begin using a maximum power of 600 watts and for a duration of 4 milliseconds. On the other hand, while performing the same type of task, a second (different) GPU model may begin using a maximum power of 1,200 watts (instead of 600 watts) and for a duration of 3 milliseconds (instead of 4). Furthermore, while performing a different type of task, the first GPU model may begin using a maximum power of 1,200 watts (instead of 600 watts) after 10 milliseconds (instead of immediately) and for a duration of 3 milliseconds (instead of 4). Based on such power consumption information, a plurality of GPUs may be synchronized such that time periods of maximum power consumption are staggered as much as possible. This reduces overlap of such time periods so that more GPUs may execute tasks simultaneously without exceeding power capacities, e.g., of racks in a data center.

For example, a first GPU may be scheduled to perform a task in 100 milliseconds, and it may be known that once the first GPU begins executing the task, it will begin using the maximum power for the task after 3 milliseconds and for a duration of 1 millisecond. Then, a second GPU in the same rack may be scheduled to perform another task in parallel with the first GPU. To avoid overlap, the second GPU may be scheduled to perform the other task such that it begins using the maximum power for the task in 104 milliseconds (or later). There are various embodiments contemplated for accomplishing such staggering.

According to a first embodiment, a central management computer may schedule the tasks on GPUs of a plurality of separate workload computers and then transmit the tasks to those workload computers for execution thereon. According to a second embodiment, the workload computers may request times for executing GPUs at maximum power. The management computer may then either approve or deny such requests to synchronize the scheduling of tasks throughout the workload computers. According to a third embodiment, on-board schedulers of the GPUs themselves may communicate with each other to synchronize the scheduling of tasks.

Regardless of how the scheduling is performed, techniques described herein allow for increasing the number of GPUs that execute at a given time without exceeding power consumption capacities. For example, such scheduling may be performed to synchronize GPUs of a single computer to more efficiently execute tasks throughout that computer. As another example, such scheduling may be performed to synchronize GPUs across all the computers of a rack to more efficiently execute tasks throughout that rack. As another example, such scheduling may be performed to synchronize GPUs across multiple racks to more efficiently execute tasks throughout those racks. These and further aspects of the invention are discussed below with respect to the drawings.

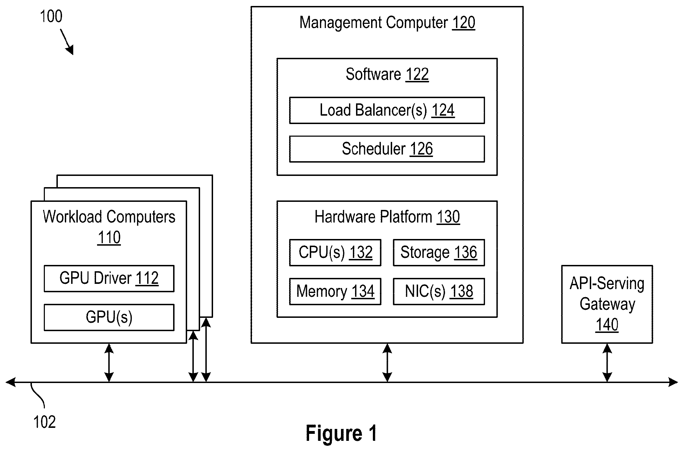

Figure 1 is a block diagram of a computer system 100 in which the first embodiment may be implemented. For example, computer system 100 may be part of a data center of a public cloud at which software is provisioned for a plurality of users. As another example, computer system 100 may be part of a data center of a private cloud at which software is provisioned for a single organization. In the example of Figure 1, computer system 100 includes a plurality of workload computers 110, a central management computer 120, and an application programming interface (API)-serving gateway 140.

At computer system 100, accelerators such as GPUs execute tasks at workload computers 110. For example, the tasks may be related to a deep learning application such as ChatGPT^{®} that users access from outside computer system 100. In such cases, those users generate API requests, e.g., in the form of hypertext transfer protocol (HTTP) requests. Those users transmit those requests to computer system 100, e.g., through API-serving gateway 140. The tasks may also be, e.g., related to applications that execute locally in computer system 100, e.g., on workload computers 110.

As used herein, a "task" for a GPU is one or more instructions executed by the GPU. Furthermore, a task may require translation into a format that is understood (executable) by the GPU. For example, in the case of a deep learning application, a task may be to generate, using an ANN, an inference based on the prompt: "What is the capital of California?" Such task may be translated by tokenizing the prompt into a plurality of words corresponding to a plurality of input nodes of the ANN.

Management computer 120 is a computer such as a server computer. Management **computer** 120 is constructed on a hardware platform 130 such as an x86 architecture platform. Hardware platform 130 includes components of a computer, such as one or more CPUs 132, memory 134 such as random-access memory (RAM), local storage 136 such as one or more magnetic drives or solid-state drives (SSDs), and one or more network interface controllers (NICs) 138. CPU(s) 132 are configured to execute instructions such as executable instructions that perform one or more operations described herein, which may be stored in memory 134. NIC(s) 138 enable management computer 120 to communicate with other devices, e.g., over a network 102 such as a local area network (LAN).

Hardware platform 130 supports software 122, including one or more load balancers 124 and a scheduler 126. Load balancer(s) 124 are software configured to retrieve tasks, e.g., from API-serving gateway 140. For example, management computer 120 may include a single load balancer for all of workload computers 110. As another example, management computer 120 may include a plurality of load balancers, each corresponding to a subset of workload computers 110, e.g., each corresponding to a rack of workload computers 110.

Scheduler 126 is software that is configured to determine when accelerators of workload computers 110 such as GPUs are to perform tasks. Scheduler 126 makes such determinations based on power consumption information about the models of the accelerators and about the types of tasks being executed thereon. Such power consumption information may be determined ahead of time. For example, for each of a plurality of different types of tasks, scheduler 126 may assign a task to one GPU for each of the different GPU models throughout workload computers 110. Then, as the GPUs execute the tasks, the power consumption of the GPUs may be measured at workload computers 110 and transmitted to management computer 120, e.g., over network 102, for storage, e.g., in memory 134 or storage 136.

Scheduler 126 staggers times of maximum power consumption for tasks, e.g., of GPUs. For example, scheduler 126 may operate at the level of individual workload computers 110. As another example, scheduler 126 may operate at the level of individual racks of workload computers 110. This may further reduce the latency of executing tasks by providing more GPUs to select from by scheduler 126 for various tasks (which enables even finer grained staggering of maximum power consumption). As another example, scheduler 126 may operate at the level of multiple racks of workload computers 110. This may further reduce the latency of executing tasks beyond that of the individual rack level by providing even more GPUs to select from for various tasks. Once scheduled, management computer 120 transmits the scheduled tasks to workload computers 110 according to the scheduling, e.g., over network 102.

Workload computers 110 are computers such as server computers. Workload computers 110 are constructed on hardware platforms (not shown) such as an x86 architecture platforms. The hardware platforms of workload computers 110 include components of computers, such as CPUs, memory such as RAM, and NICs. The CPUs may be configured to execute instructions such as executable instructions that perform one or more operations described herein, which may be stored in the memory. The NICs enable workload computers 110 to communicate with other devices, e.g., over network 102.

The hardware platform of each of workload computers 110 further includes one or more accelerators such as GPUs for executing tasks. Workload computers 110 may also include other accelerators, as discussed above. The hardware platform of each of workload computers 110 supports software, including a GPU driver 112. GPU driver 112 is a computer program that provides a software interface to one or more GPUs. When one of workload computers 110 receives a task that is scheduled for a GPU, GPU driver 112 provides the task to the GPU to be executed at the scheduled time. Drivers for other types of accelerators may also be included in the software of workload computers 110 for providing software interfaces therefor and for providing tasks thereto for execution at scheduled times.

API-serving gateway 140 is a point of access that, according to some embodiments, receives requests over the Internet to perform tasks using GPUs. For example, API-serving gateway 140 may be a computer such as a server computer that receives HTTP requests and communicate such requests to management computer 120, e.g., over network 102. According to such embodiments, once such requests are serviced using the GPUs, workload computers 110 transmit results to API-serving gateway 140, e.g., over network 102. API-serving gateway 140 then transmits those results, e.g., over the Internet and in the form of HTTP responses.

It should be noted that the first embodiment is not limited by the example configuration of Figure 1. For example, although software 122 is illustrated as executing outside workload computers 110, software 122 may instead execute on one of workload computers 110. As another example, although load balancer(s) 124 are illustrated as executing on the same computer as scheduler 126, this is not required. For example, load balancer(s) 124 may execute on a separate computer(s), e.g., on the same computer as API-serving gateway 140.

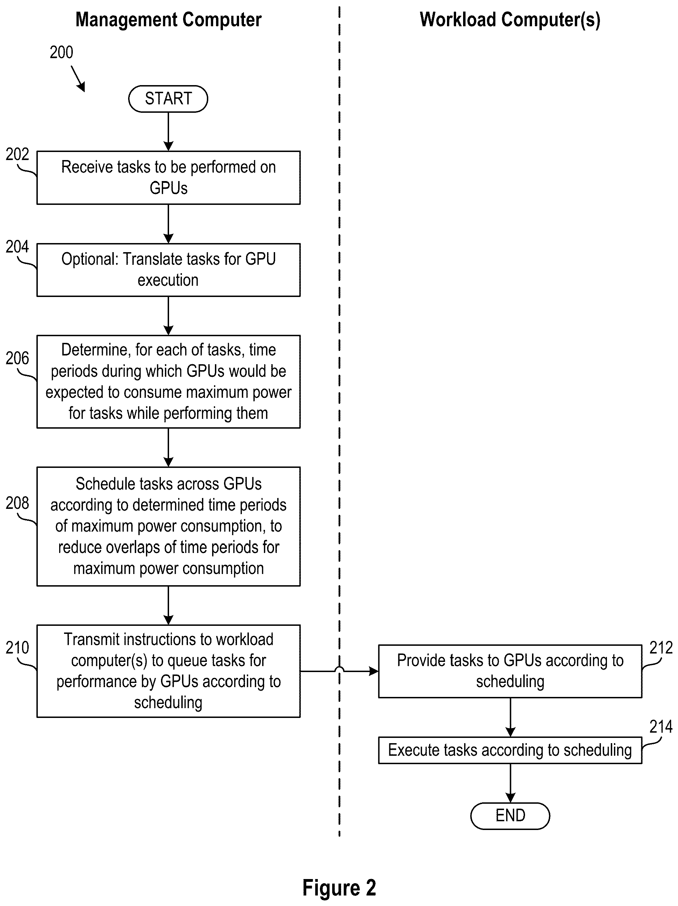

Figure 2 is a flow diagram of a method 200 that may be performed by management computer 120 and one or more of workload computers 110 to execute tasks using GPUs, according to the first embodiment. Method 200 may be performed, e.g., separately for GPUs of individual ones of workload computers 110, separately for GPUs of individual racks of workload computers 110, or for GPUs of workload computers 110 across racks. At step 202, management computer 120 receives tasks to be performed on GPUs of a workload computer(s) 110. For example, load balancer(s) 124 may retrieve such tasks from API-serving gateway 140.

At step 204, as an optional step, management computer 120 may translate the tasks for GPU execution. For example, if the tasks are for generating inferences using ANNs, load balancer(s) 124 may translate the tasks, as discussed above. At step 206, management computer 120 determines, for each of the tasks, time periods during which GPUs would be expected to consume maximum power for the tasks while performing them. As discussed above, scheduler 126 may make such determinations based on power consumption information about the models of the GPUs and about the types of tasks being executed. Scheduler 126 may retrieve such power consumption information, e.g., from memory 134 or storage 136.

At step 208, management computer 120 schedules tasks across GPUs according to determined time periods of maximum power consumption. Such scheduling reduces overlaps of time periods for maximum power consumption, e.g., ensures that the number of such overlaps is less than a threshold. For example, step 208 may work as follows with respect to two of the GPUs. Scheduler 126 schedules several tasks to be performed by the two GPUs such that the GPUs execute in parallel.

The several tasks include a first set of tasks that are scheduled to be performed by the first GPU and a second set of tasks for the second GPU. The first and second GPUs may execute on the same one of workload computers 110 or may execute on different ones of workload computers 110 (in the same rack or in different racks). For each of the several tasks, scheduler 126 determines a time period during which the first GPU would be expected to consume maximum power for the task while performing the task. Similarly, for each of the several tasks, scheduler 126 determines a time period during which the second GPU would be expected to consume maximum power for the task.

For any one of the tasks, if the first and second GPUs are the same model, the determined time periods are the same, and if they are different models, the determined time periods may differ. Additionally, for two tasks that are the same type, e.g., generating an inference using the same ANN, the determined time periods for the two tasks on the first GPU are the same, and the determined time periods for the two tasks on the second GPU are the same. However, for two tasks that are of different types, e.g., generating inferences using different ANNs, the determined time periods for the two tasks on the first GPU may differ, and the determined time periods for the two tasks on the second GPU may differ. Scheduler 126 schedules the first and second sets of tasks for the first and second GPUs at times that reduce overlaps of time periods for maximum power consumption. For example, such scheduling may ensure that there is no overlap at all between time periods of maximum power consumption for tasks in the first GPU and time periods of maximum power consumption for tasks in the second GPU. As another example, such scheduling may be based on the magnitudes of maximum power consumptions for tasks, e.g., to ensure that there is no overlap between time periods of maximum power consumption when such overlap combines to exceed a threshold power such as 6 kilowatts.

Similar scheduling may be performed for tasks to be executed by many GPUs, e.g., thousands of GPUs. Scheduler 126 schedules several tasks to be executed across all the GPUs such that the GPUs execute in parallel. In the case of many GPUs (e.g., thousands), for various tasks, scheduler 126 determines time periods during which GPUs would be expected to consume maximum power for the tasks while performing them. Such time periods vary, as described above, based on the models of GPUs and the types of tasks. Scheduler 126 then schedules tasks for each of the GPUs at times that reduce overlaps overall of time periods of maximum power consumption among the GPUs. Over time, there may inevitably be some overlap between times of maximum power consumption, but such overlap is avoided for many of the tasks.

At step 210, management 120 instructs the GPUs to perform the tasks according to the scheduling by transmitting instructions to workload computer(s) 110 to queue tasks for performance by the GPUs according to the scheduling. Such instructions may include, e.g., the tasks, which may have been translated, identifiers of which GPUs the tasks are scheduled for, and times the tasks have been scheduled for. At step 212, workload computer(s) 110 provide the tasks to the GPUs according to the scheduling. At step 214, the GPUs of workload computer(s) 110 execute the tasks according to the scheduling. For example, in the case of deep learning applications, such execution may involve generating inferences based on prompts.

After step 214, method 200 ends. After method 200, the results of executing the tasks may be returned based on the application(s). For example, in the case of a deep learning application executing remotely from computer system 100, workload computer(s) 110 may transmit responses to prompts, to API-serving gateway 140. API-serving gateway 140 may then transmit such responses to users of the deep learning application.

As mentioned above, software 122 may execute on one of workload computers 110 instead of executing separately on management computer 120. Accordingly, steps 202-210 may be performed by one of workload computers 110 instead of by management computer 120. Furthermore, in such case, step 210 is not needed for scheduling tasks on the same one of workload computers 110 on which software 122 executes. In other words, for tasks scheduled on GPUs of the same one of workload computers 110, there is no need to transmit such tasks to others of workload computers 110, and such GPUs may simply be instructed to perform tasks according to the scheduling. Additionally, as mentioned above, method 200 may be performed with respect to other accelerators besides GPUs.

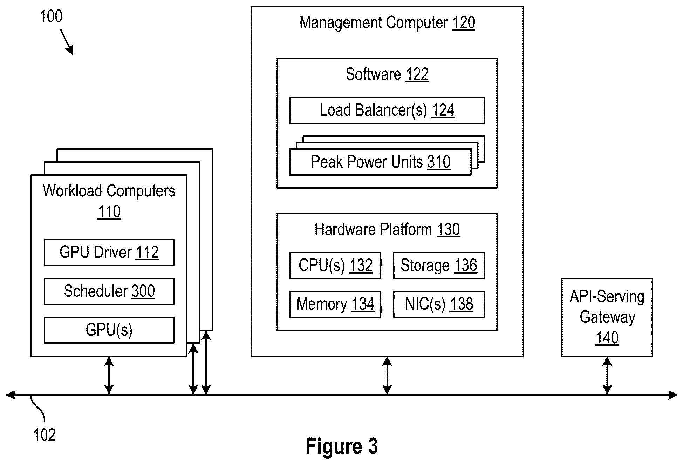

Figure 3 is a block diagram of computer system 100 in which the second embodiment may be implemented. Items of Figure 3 that perform the same or similar functionality as corresponding items of Figure 1 include like numerals and will not be explained again. In the example of Figure 3, the software of each of workload computers 110 includes a scheduler 300. Additionally, in the example of Figure 3, software 122 of management computer 120 includes peak power units 310.

Peak power units 310 are data associated with timings for maximum power consumption. Peak power units 310 act as a finite resource that is obtained by workload computers 110 to execute accelerators such as GPUs at maximum power for workloads at specific times. Management computer 120 uses such finite resource to ensure that not too many accelerators are executing at maximum power for workloads thereon at the same time. Peak power units 310 may be subdivided, e.g., to be associated with individual ones of workload computers 110 or with individual racks of workload computers 110, to stagger maximum power consumption at varying levels of granularity. Peak power units 310 may also, e.g., be associated with a plurality of racks of workload computers 110 to stagger maximum power consumption across racks.

For one of workload computers 110 to schedule a task such that a GPU therein will consume maximum power for a task at a given time (and over a given time period), workload computer 110 first requests management computer 120 for one or more of peak power units 310 associated with that time period. If the requested one(s) of peak power units 310 are available, workload computer 110 schedules the task accordingly. Otherwise, workload computer 110 acquires a different one(s) of peak power units 310 and schedules the task accordingly.

In each of workload computers 110, scheduler 300 is software that is configured to determine when an accelerator(s) in workload computer 110 are to perform tasks. Similar to scheduler 126 of the first embodiment, scheduler 300 makes such determinations based on power consumption information about the model(s) of the accelerators and about the types of tasks being executed. Similar to the first embodiment, such power consumption information may be determined ahead of time at workload computer 110 and stored, e.g., in memory or storage thereof. However, as discussed above, before actually scheduling tasks, scheduler 300 first requests peak power units 310 from management computer 120. GPU driver 112 only provides tasks to a GPU(s) when the associated ones of peak power units 310 are available.

It should be noted that the second embodiment is not limited by the example configuration of Figure 3. For example, software 122 may execute on one of workload computers 110 or load balancer(s) 124 may execute on a separate computer(s), e.g., on the same computer as API-serving gateway 140. As another example, although only one management computer is illustrated, a plurality of management computers 120 may be utilized for managing peak power units 310 to ensure consistency and reliability. According to such example, a minimum number of management computers 120 (a quorum) may be required to agree on decisions regarding assigning peak power units 310.

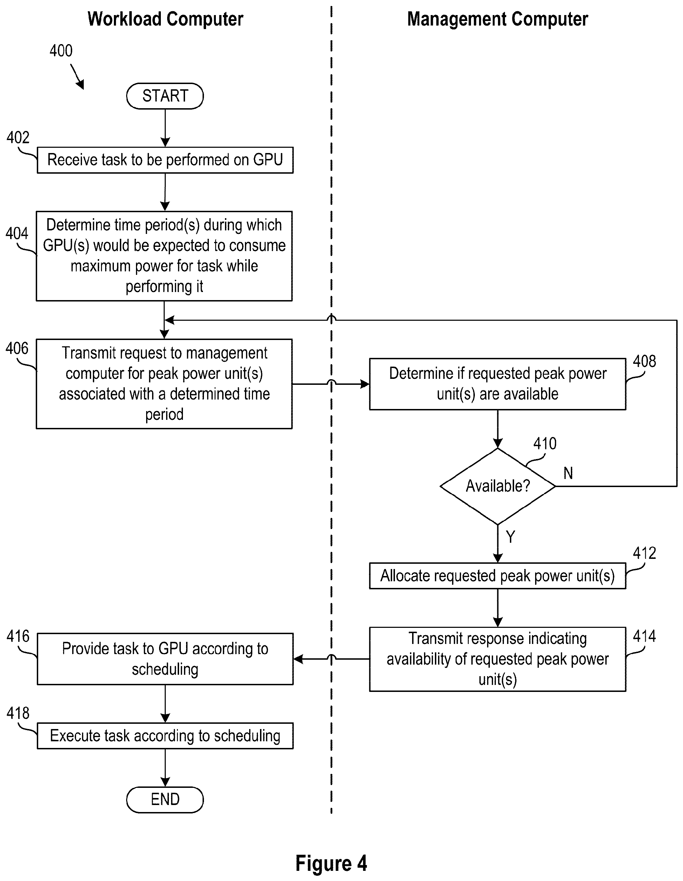

Figure 4 is a flow diagram of a method 400 that may be performed by one of workload computers 110 and management computer 120 to execute a task using a GPU, according to the second embodiment. Method 400 may be performed at varying levels of granularity, e.g., for peak power units 310 associated only with workload computer 110, for peak power units 310 associated with an entire rack that includes workload computer 110, or for peak power units 310 associated with a plurality of racks including the rack that includes workload computer 110. At step 402, workload computer 110 receives a task to be performed on a GPU thereof. For example, one of load balancer(s) 124 may retrieve such task from API-serving gateway 140 and transmit the task to workload computer 110. Load balancer(s) 124 may also first translate the task for GPU execution, as discussed above.

At step 404, workload computer 110 determines a time period(s) during which a GPU(s) thereof would be expected to consume maximum power for the task while performing it. As discussed above, scheduler 300 may make such determination based on power consumption information about the model(s) of the GPU(s) and about the type of task to be executed. Scheduler 300 may retrieve such power consumption information from memory or storage of workload computer 110.

At step 406, workload computer 110 transmits a request to management computer 120 for one or more of peak power units 310 associated with the determined time period(s). For example, for the task, if each GPU of workload computer 110 would execute at maximum power for the task for a duration of 2 milliseconds, workload computer 110 may transmit a request for one or more of peak power units 310 associated with a 2-millisecond duration, e.g., beginning in 100 milliseconds. As another example, if workload computer 110 includes GPUs that consume maximum power for the task for varying durations of time, workload computer 110 may select one of such durations and transmit a request accordingly.

At step 408, management computer 120 determines if the one(s) of requested peak power units 310 are available, i.e., if for the requested time period, the number of GPUs that are already scheduled for consuming maximum power, has not exceeded a threshold. For example, if the request one(s) of peak power units 310 are available, software 122 may, e.g., include metadata corresponding thereto that indicates such availability. If the requested one(s) of peak power units 310 are unavailable (already assigned), software 122 may, e.g., include corresponding metadata that indicates such unavailability.

At step 410, if unavailable, management computer 120 transmits a message to workload computer 110 indicating the unavailability. Method 400 then returns to step 406, and workload computer 110 transmits a request for a different one(s) of peak power units 310, e.g., for the same duration but starting at a later time. Returning to step 410, if a requested one(s) of peak power units 310 are available, method 400 moves to step 412. At step 412, management computer 120 allocates the requested one(s) of peak power units 310 for workload computer 110 (for a GPU thereon). For example, management computer 120 may update metadata in software 122 corresponding to the one(s) of peak power units 310 to indicate that they are no longer available for being acquired, e.g., by others of workload computers 110.

At step 414, management computer 120 transmits a message to workload computer 110 indicating the availability. At step 416, workload computer 110 provides the task to a GPU according to the scheduling. At step 418, the GPU executes the task according to the scheduling. For example, in the case of deep learning applications, such execution may involve generating an inference based on a prompt.

After step 418, method 400 ends. After method 400, the result of executing the task may be returned based on the application. For example, in the case of a deep learning application executing remotely from computer system 100, workload computer 110 may transmit a response to a prompt, to API-serving gateway 140. API-serving gateway 140 may then transmit such response to a user of the deep learning application.

As mentioned above, software 122 may execute on one of workload computers 110 instead of executing separately on management computer 120. Accordingly, steps 408-414 may be performed by one of workload computers 110 instead of by management computer 120. Furthermore, in such case, steps 406 and 414 are not needed for scheduling tasks on the same one of workload computers 110 on which software 122 executes. In other words, for tasks scheduled on GPUs of the same one of workload computers 110, there is no need to transmit a request for peak power units or transmit a response to such request because peak power units 310 are managed on the same one of workload computers 110. Additionally, as mentioned above, method 400 may be performed with respect to other accelerators besides GPUs.

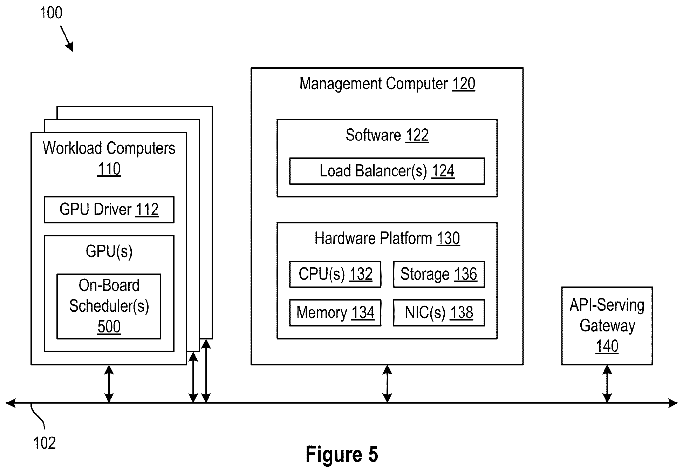

Figure 5 is a block diagram of computer system 100 in which the third embodiment may be implemented. Items of Figure 5 that perform the same or similar functionality as corresponding items of Figure 1 include like numerals and will not be explained again. In the example of Figure 5, each GPU of workload computers 110 includes an on-board scheduler 500. On-board scheduler 500 is hardware that is configured to determine when a GPU is to perform tasks. Similar to scheduler 126 of the first embodiment, on-board scheduler 500 makes such determinations based on power consumption information about the model of the associated GPU and about the types of tasks being executed. Similar to the first embodiment, such power consumption information may be determined ahead of time at workload computer 110 and stored, e.g., in memory or storage thereof.

However, according to the third embodiment, as opposed to a central scheduler coordinating the execution of tasks on a plurality of accelerators, on-board schedulers 500 of the accelerators communicate with each other to coordinate such execution. Such coordination ensures that not too many accelerators are executing at maximum power for tasks at the same time. Such coordination may be, e.g., between GPUs of individual ones of workload computers 110, between GPUs of individual racks of workload computers 110, or between GPUs of a plurality of racks of workload computers 110. It should be noted that the third embodiment is not limited by the example configuration of Figure 5. For example, software 122 may execute on one of workload computers 110 or load balancer(s) 124 may execute on a separate computer(s), e.g., on the same computer as API-serving gateway 140.

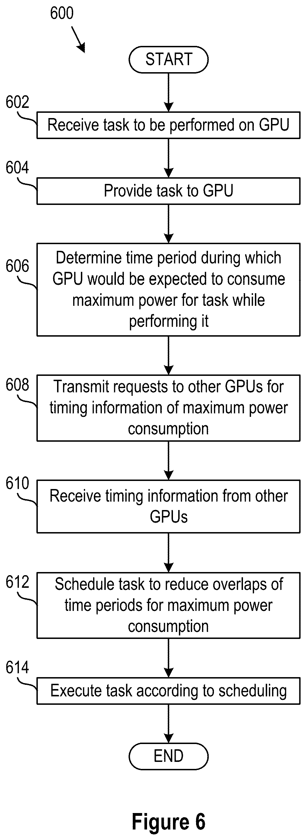

Figure 6 is a flow diagram of a method 600 that may be performed by one of workload computers 110, according to the third embodiment. Method 600 may be performed at varying levels of granularity, e.g., for coordinating between GPUs of workload computer 110, for coordinating between GPUs of an entire rack that includes workload computer 110, or for coordinating between GPUs of a plurality of racks including the rack that includes workload computer 110. At step 602, workload computer 110 receives a task to be performed on a GPU thereof. For example, one of load balancer(s) 124 may retrieve such task from API-serving gateway 140 and transmit the task to workload computer 110. Load balancer(s) 124 may also first translate the task for GPU execution, as discussed above.

At step 604, workload computer 110 provides the task to a GPU therein. At step 606, on-board scheduler 500 of the GPU determines a time period during which the GPU would be expected to consume maximum power for the task while performing it. As discussed above, scheduler 500 may make such determination based on power consumption information about the model of the GPU and about the type of task to be executed. Scheduler 500 may retrieve such power consumption information from memory or storage of workload computer 110.

At step 608, the GPU transmits requests to other GPUs, e.g., over network 102, for timing information of maximum power consumption. Such information indicates when the other GPUs will consume maximum power for tasks already scheduled thereon. For example, the requests may be sent to all other GPUs of workload computer 110, to all other GPUs of workload computers 110 of a single rack, or to all other GPUs of workload computers 110 of multiple racks. At step 610, the GPU receives the timing information from the other GPUs, e.g., over network 102.

At step 612, on-board scheduler 500 schedules the task according to the time period determined at step 606 and the timing information received at step 610, to reduce overlaps of time periods for maximum power consumption. For example, on-board scheduler 500 may ensure that there is no overlap at all between time periods of maximum power consumption between the GPU thereof and another GPU, as discussed above with respect to step 208 of Figure 2. On-board scheduler 500 may also, e.g., ensure that the number of overlaps with a plurality of GPUs is less than a threshold. At step 614, the GPU executes the task according to the scheduling. For example, in the case of deep learning applications, such execution may involve generating an inference based on a prompt.

After step 614, method 600 ends. After method 600, the result of executing the task may be returned based on the application. For example, in the case of a deep learning application executing remotely from computer system 100, workload computer 110 may transmit a response to a prompt, to API-serving gateway 140. API-serving gateway 140 may then transmit such response to a user of the deep learning application. As mentioned above, method 600 may be performed with respect to other accelerators besides GPUs.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

The invention further provides the following embodiments:
1. A computer system including a processor and memory, wherein the processor executes instructions stored in the memory to schedule tasks to be performed by a plurality of accelerators including a first accelerator and a second accelerator, based on information about power consumption, by performing the following steps:
   receiving a plurality of tasks to be performed on the plurality of accelerators;
   determining, for each of the tasks, a time period during which the first accelerator would be expected to consume maximum power for the task while performing the task;
   determining, for each of the tasks, a time period during which the second accelerator would be expected to consume maximum power for the task while performing the task;
   scheduling the tasks across the first and second accelerators according to the determined time periods of maximum power consumption for the first and second accelerators, wherein based on the scheduling, there is no overlap between time periods for maximum power consumption in the first accelerator and time periods for maximum power consumption in the second accelerator; and
   instructing the first and second accelerators to perform the tasks according to the scheduling.
2. The computer system of embodiment 1, wherein the first accelerator and the second accelerator are different models of accelerators, and the steps further include:
   determining, for a first task of the tasks, that the first accelerator and the second accelerator have different time periods during which the respective accelerator would be expected to consume maximum power for the first task while performing the first task.
3. The computer system of embodiment 1, wherein the steps further include:
   determining that the time period during which the first accelerator would be expected to consume maximum power for a first task of the tasks while performing the first task is different from the time period during which the first accelerator would be expected to consume maximum power for a second task of the tasks while performing the second task.
4. The computer system of embodiment 1, wherein the tasks require inferences to be generated by artificial neural networks (ANNs) executed by the first and second accelerators, and the steps further include:
   translating each of the tasks into inputs corresponding to input nodes of the ANNs before instructing the first and second accelerators to perform the tasks.
5. The computer system of embodiment 1, wherein the first and second accelerators execute on a workload computer of the computer system that is separate from a management computer of the computer system that schedules the tasks across the first and second accelerators, and the steps further include:
   transmitting, by the management computer over a network to the workload computer, instructions to queue the tasks for performance by the first and second accelerators according to the scheduling.
6. The computer system of embodiment 1, wherein the first accelerator executes on a first workload computer of the computer system that is separate from a management computer of the computer system that schedules the tasks across the first and second accelerators, the second accelerator executes on a second workload computer of the computer system, and the steps further include:
   transmitting, by the management computer over a network to the first and second workload computers, instructions to queue the tasks for performance by the first and second accelerators according to the scheduling.
7. The computer system of embodiment 1, wherein the steps further include:
   retrieving the tasks from a gateway of a data center, by one or more load balancers executing in the computer system.
8. A method of scheduling tasks to be performed by a plurality of accelerators including a first accelerator and a second accelerator, based on information about power consumption, the method comprising:
   receiving a plurality of tasks to be performed on the plurality of accelerators;
   determining, for each of the tasks, a time period during which the first accelerator would be expected to consume maximum power for the task while performing the task;
   determining, for each of the tasks, a time period during which the second accelerator would be expected to consume maximum power for the task while performing the task;
   scheduling the tasks across the first and second accelerators according to the determined time periods of maximum power consumption for the first and second accelerators, wherein based on the scheduling, there is no overlap between time periods for maximum power consumption in the first accelerator and time periods for maximum power consumption in the second accelerator; and
   instructing the first and second accelerators to perform the tasks according to the scheduling.
9. The method of embodiment 8, wherein the first accelerator and the second accelerator are different models of accelerators, the method further comprising:
   determining, for a first task of the tasks, that the first accelerator and the second accelerator have different time periods during which the respective accelerator would be expected to consume maximum power for the first task while performing the first task.
10. The method of embodiment 8, further comprising:
   determining that the time period during which the first accelerator would be expected to consume maximum power for a first task of the tasks while performing the first task is different from the time period during which the first accelerator would be expected to consume maximum power for a second task of the tasks while performing the second task.
11. The method of embodiment 8, wherein the tasks require inferences to be generated by artificial neural networks (ANNs) executed by the first and second accelerators, the method further comprising:
   translating each of the tasks into inputs corresponding to input nodes of the ANNs before instructing the first and second accelerators to perform the tasks.
12. The method of embodiment 8, further comprising:
   transmitting, over a network to a workload computer, instructions to queue the tasks for performance by the first and second accelerators according to the scheduling.
13. The method of embodiment 8, further comprising:
   transmitting, over a network to a first workload computer that includes the first accelerator and to a second workload computer that includes the second accelerator, instructions to queue the tasks for performance by the first and second accelerators according to the scheduling.
14. A non-transitory computer-readable medium comprising instructions that are executable in a computer system, wherein the instructions when executed cause the computer system to carry out a method of scheduling tasks to be performed by a plurality of accelerators including a first accelerator and a second accelerator, based on information about power consumption, and wherein the method comprises:
   receiving a plurality of tasks to be performed on the plurality of accelerators;
   determining, for each of the tasks, a time period during which the first accelerator would be expected to consume maximum power for the task while performing the task;
   determining, for each of the tasks, a time period during which the second accelerator would be expected to consume maximum power for the task while performing the task;
   scheduling the tasks across the first and second accelerators according to the determined time periods of maximum power consumption for the first and second accelerators, wherein based on the scheduling, there is no overlap between time periods for maximum power consumption in the first accelerator and time periods for maximum power consumption in the second accelerator; and
   instructing the first and second accelerators to perform the tasks according to the scheduling.
15. The non-transitory computer-readable medium of embodiment 14, wherein the first accelerator and the second accelerator are different models of accelerators, and the method further comprises:
   determining, for a first task of the tasks, that the first accelerator and the second accelerator have different time periods during which the respective accelerator would be expected to consume maximum power for the first task while performing the first task.
16. The non-transitory computer-readable medium of embodiment 14, wherein the method further comprises:
   determining that the time period during which the first accelerator would be expected to consume maximum power for a first task of the tasks while performing the first task is different from the time period during which the first accelerator would be expected to consume maximum power for a second task of the tasks while performing the second task.
17. The non-transitory computer-readable medium of embodiment 14, wherein the tasks require inferences to be generated by artificial neural networks (ANNs) executed by the first and second accelerators, and the method further comprises:
   translating each of the tasks into inputs corresponding to input nodes of the ANNs before instructing the first and second accelerators to perform the tasks.
18. The non-transitory computer-readable medium of embodiment 14, wherein the first and second accelerators execute on a workload computer of the computer system that is separate from a management computer of the computer system that schedules the tasks across the first and second accelerators, and the method further comprises:
   transmitting, by the management computer over a network to the workload computer, instructions to queue the tasks for performance by the first and second accelerators according to the scheduling.
19. The non-transitory computer-readable medium of embodiment 14, wherein the first accelerator executes on a first workload computer of the computer system that is separate from a management computer of the computer system that schedules the tasks across the first and second accelerators, the second accelerator executes on a second workload computer of the computer system, and the method further comprises:
   transmitting, by the management computer over a network to the first and second workload computers, instructions to queue the tasks for performance by the first and second accelerators according to the scheduling.
20. The non-transitory computer-readable medium of embodiment 14, wherein the method further comprises:
   retrieving the tasks from a gateway of a data center, by one or more load balancers executing in the computer system.

## Claims

1. A computer system including a processor and memory, wherein the processor executes instructions stored in the memory to schedule tasks to be performed by a plurality of accelerators including a first accelerator and a second accelerator, based on information about power consumption, by performing the following steps:
receiving a plurality of tasks to be performed on the plurality of accelerators;
determining, for each of the tasks, a time period during which the first accelerator would be expected to consume maximum power for the task while performing the task;
determining, for each of the tasks, a time period during which the second accelerator would be expected to consume maximum power for the task while performing the task;
scheduling the tasks across the first and second accelerators according to the determined time periods of maximum power consumption for the first and second accelerators, wherein based on the scheduling, there is no overlap between time periods for maximum power consumption in the first accelerator and time periods for maximum power consumption in the second accelerator; and
instructing the first and second accelerators to perform the tasks according to the scheduling.

2. The computer system of claim 1, wherein the first accelerator and the second accelerator are different models of accelerators, and the steps further include:
determining, for a first task of the tasks, that the first accelerator and the second accelerator have different time periods during which the respective accelerator would be expected to consume maximum power for the first task while performing the first task.

3. The computer system of claim 1 or claim 2, wherein the steps further include:
determining that the time period during which the first accelerator would be expected to consume maximum power for a first task of the tasks while performing the first task is different from the time period during which the first accelerator would be expected to consume maximum power for a second task of the tasks while performing the second task.

4. The computer system of one of claims 1 to 3, wherein the tasks require inferences to be generated by artificial neural networks (ANNs) executed by the first and second accelerators, and the steps further include:
translating each of the tasks into inputs corresponding to input nodes of the ANNs before instructing the first and second accelerators to perform the tasks.

5. The computer system of one of claims 1 to 4, wherein the first and second accelerators execute on a workload computer of the computer system that is separate from a management computer of the computer system that schedules the tasks across the first and second accelerators, and the steps further include:
transmitting, by the management computer over a network to the workload computer, instructions to queue the tasks for performance by the first and second accelerators according to the scheduling.

6. The computer system of one of claims 1 to 5, wherein the first accelerator executes on a first workload computer of the computer system that is separate from a management computer of the computer system that schedules the tasks across the first and second accelerators, the second accelerator executes on a second workload computer of the computer system, and the steps further include:
transmitting, by the management computer over a network to the first and second workload computers, instructions to queue the tasks for performance by the first and second accelerators according to the scheduling.

7. The computer system of one of claims 1 to 6, wherein the steps further include:
retrieving the tasks from a gateway of a data center, by one or more load balancers executing in the computer system.

8. A method of scheduling tasks to be performed by a plurality of accelerators including a first accelerator and a second accelerator, based on information about power consumption, the method comprising:
receiving a plurality of tasks to be performed on the plurality of accelerators;
determining, for each of the tasks, a time period during which the first accelerator would be expected to consume maximum power for the task while performing the task;
determining, for each of the tasks, a time period during which the second accelerator would be expected to consume maximum power for the task while performing the task;
scheduling the tasks across the first and second accelerators according to the determined time periods of maximum power consumption for the first and second accelerators, wherein based on the scheduling, there is no overlap between time periods for maximum power consumption in the first accelerator and time periods for maximum power consumption in the second accelerator; and
instructing the first and second accelerators to perform the tasks according to the scheduling.

9. The method of claim 8, wherein the first accelerator and the second accelerator are different models of accelerators, the method further comprising:
determining, for a first task of the tasks, that the first accelerator and the second accelerator have different time periods during which the respective accelerator would be expected to consume maximum power for the first task while performing the first task.

10. The method of claim 8 or claim 9, further comprising:
determining that the time period during which the first accelerator would be expected to consume maximum power for a first task of the tasks while performing the first task is different from the time period during which the first accelerator would be expected to consume maximum power for a second task of the tasks while performing the second task.

11. The method of one of claims 8 to 10, wherein the tasks require inferences to be generated by artificial neural networks (ANNs) executed by the first and second accelerators, the method further comprising:
translating each of the tasks into inputs corresponding to input nodes of the ANNs before instructing the first and second accelerators to perform the tasks.

12. The method of one of claims 8 to 11, further comprising:
transmitting, over a network to a workload computer, instructions to queue the tasks for performance by the first and second accelerators according to the scheduling.

13. The method of one of claims 8 to 12, further comprising:
transmitting, over a network to a first workload computer that includes the first accelerator and to a second workload computer that includes the second accelerator, instructions to queue the tasks for performance by the first and second accelerators according to the scheduling.

14. A non-transitory computer-readable medium comprising instructions that are executable in a computer system, wherein the instructions when executed cause the computer system to carry out a method of scheduling tasks to be performed by a plurality of accelerators including a first accelerator and a second accelerator, based on information about power consumption according to one of claims 8 to 13.

15. The non-transitory computer-readable medium of claim 14, wherein the method further comprises:
retrieving the tasks from a gateway of a data center, by one or more load balancers executing in the computer system.
